# EUROPEAN PATENT APPLICATION

(11) **EP 1 117 266 A1**
(43) Date of publication of application: **18.07.2001**
(21) Application number: 00850008.4
(22) Date of filing: 15.01.2000
(51) Int. Cl.: H04Q 7/32, H04Q 7/38

(54) **Method and apparatus for global roaming**

(71) Applicant: TELEFONAKTIEBOLAGET LM ERICSSON, 126 25 Stockholm (SE)
(72) Inventor: Charas, Philippe, 194 78 Upplands Väsby (SE)
(74) Representative: Dohmen, Johannes Maria Gerardus

(57) **Abstract**

The present invention relates to methods for providing access independent global roaming between heterogeneous networks. The invention solves this problem and provides policy enforcement and service transparency when terminals roam between different heterogeneous networks by; moving the policy enforcement point from the network into the terminal, regarding the transport mechanism between terminals and servers as a packet pipe, adding no extra value except transport and Quality of Service classification thereof. The payment for access and services are separated and payment of access is paid in real-time by an anonymous payment method. By using the proposed method the terminal becomes more like a personal profile manager, managing rights to services and access. The ability to purchase access opens the possibility for the terminal to act as an e-commerce platform, and the subscriber can access any network any time since access is paid for in real time, considered the necessary modems are provided.

## Description

### TECHNICAL FIELD OF THE INVENTION

The present invention relates generally to methods for global roaming, and more particularly, the invention relates to a method for access independent global roaming.

The invention also relates to a mobile terminal for carrying out the method.

### BACKGROUND OF THE INVENTION

A large number of fixed and mobile access standards are now available, such as Wideband-Code Division Multiple Access (W-CDMA), Universal Mobile Telephone System-Time Division Duplex (UMTS-TDD), CDMA 2000, Wireless-Local Area Network (W-LAN), EDGE etc, all of which belong to the 3^{rd} generation wireless standards. Each type of access standard has its own particular network concept; where Mobile Internet Protocol (Mobile IP) and the General Packet Radio Service (GPRS) tunnelling protocol are the main two concepts. The invention, however, is not limited to the above mentioned concepts.

Interoperability between different network concepts is not guaranteed using methods presently available. This is mainly due to three obstacles. First, there is a lack of common subscriber profiles, service standards and authentication mechanisms, preventing policy enforcement in other networks. Second, there is a lack of common Quality of Service versus resource allocation paradigm in the access networks due to a bottom up instead of a top down approach in designing the data link layers with respect to Quality of Service requirements. Third, there is a lack of common higher layer standards in the terminals, preventing service transparency when terminals roam between different networks that carry specific services.

Thus, there is a problem with interoperability between heterogeneous networks mainly because of problems with authentication and service transparency in and between different networks. It is, of course, theoretically possible to harmonise disparate networks at all of the above levels and thus creating interoperability. There is, however, a need for an organic way of integrating heterogeneous networks and thus provide for global roaming.

### SUMMARY OF THE INVENTION

The present invention therefore provides a solution to the problems of integrating heterogeneous networks and providing a mobile terminal that supports multiple access global roaming and access to services via heterogeneous networks without need for harmonising disparate networks.

An object of the invention is thus to provide a mobile terminal that supports access independent global roaming in heterogeneous networks.

The invention achieves the above mentioned object *inter alia* by:
moving all service related functions out of the network into user terminals and servers,
including, in the terminal, a policy enforcement point, enforcing policies defined in a policy definition point, the policy enforcement point consisting of a policy enforcement engine and a policy repository, managing the users access to services via heterogeneous networks,
separating charging of transport from the charging of services and introducing real-time payment of transport, and
modularising layer 1 and layer 2 functionality (modems) in the terminal, exchangeable for different access networks, such as W-CDMA, CDMA 2000, EDGE, W-LAN, Bluetooth™ etc.

More specifically the policies defined in the policy definition point are enforced locally in the user terminal in a local policy enforcement point, consisting of a policy enforcement engine and a policy repository, instead of as usual in the network. By policies in this context is meant a set of rights and obligations pertaining to authentication of users, authorisation to access and services as well as purchasing and brokering of access resources and security. Separate policies govern the charging functions for access charging and service charging. Transport can be paid for in real-time via a credit card, pre-paid card, cash card or the like and services are paid for as usual e.g. as per invoice.

The terminal thus acts more like a personal profile manager, enforcing policies, hence managing rights to services and access. Services and access are controlled in the terminal by the policy enforcement engine and the policy repository. The terminal/profile manager is access independent since access can be purchased in real-time. Thus, the subscriber can access any network at any time, considered the right modem is provided.

By adopting the proposed solution, as described in the embodiments of the invention, global roaming is possible between heterogeneous networks such as, CDMA 2000, W-LAN, EDGE and UMTS. The ability to purchase access also opens the possibility for the terminal to act as an e-commerce platform; i.e. the terminal can be used to purchase anything, not just access.

The term transport is used in this specification to denote both the access network and the core transport network, i.e. an access network such as CDMA 2000, W-CDMA etc. and a core transport network, such as an IP-network.

Although the invention has been summarised above, the method and arrangement according to the appended independent claims 1 and 12 define the scope of the invention. Various embodiments are further defined in dependent claims 2-11.

### BRIEF DESCRIPTION OF THE DRAWINGS

The objects and advantages of the invention will be understood by reading the following detailed description in conjunction with the drawings, in which:
- Figure 1: shows a schematic picture of the architecture for global roaming;
- Figure 2: shows an embodiment of an anonymous payment method;
- Figure 3: shows a detailed view of an embodiment of a local policy enforcement point;
- Figure 4: shows a detailed view of an embodiment of a secure mobile portal;
- Figure 5: is an exemplary signalling diagram illustrating the signalling involved in a session set up;
- Figure 6: is a detailed view of an exemplary embodiment of the terminal; and
- Figure 7: shows a mixed access scenario.

### DETAILED DESCRIPTION

The various features of the invention will now be described with reference to the figures, in which like parts are identified with the same reference characters. In the following description, for purpose of explanation and not limitation, specific details are set forth, such as particular circuits, components, techniques, etc. in order to provide a thorough understanding of the present invention. However, it will be apparent to one skilled in the art that the present invention may be practised in other embodiments that depart from these specific details. In other instances, detailed descriptions of well-known methods, devices and circuits are omitted so as not to obscure the description of the present invention.

This detailed description begins with a description of a network architecture providing for global roaming, then a description of embodiments of a mobile terminal that supports multiple access global roaming in such a network follows.

The present invention provides a mobile terminal that supports access independent global roaming between heterogeneous networks and solves the problem with policy enforcement and service transparency when mobile terminals roam in and between different networks. The solution contains a number of salient features.
1) A transparent packet pipe, interconnecting servers and clients (terminals) on a Quality of Service basis, transporting packets.
2) A policy definition point within a server cluster defining policies pertaining to access rights as well as rights to services.
3) A policy enforcement point, consisting of a policy enforcement engine and a policy repository, enforcing policies defined in the policy definition point, moved out from the network into the terminal (client).
4) Separate charging mechanisms for access and services.
5) A transformation of the access node into a point of sale for access, offering transparent IP transport.

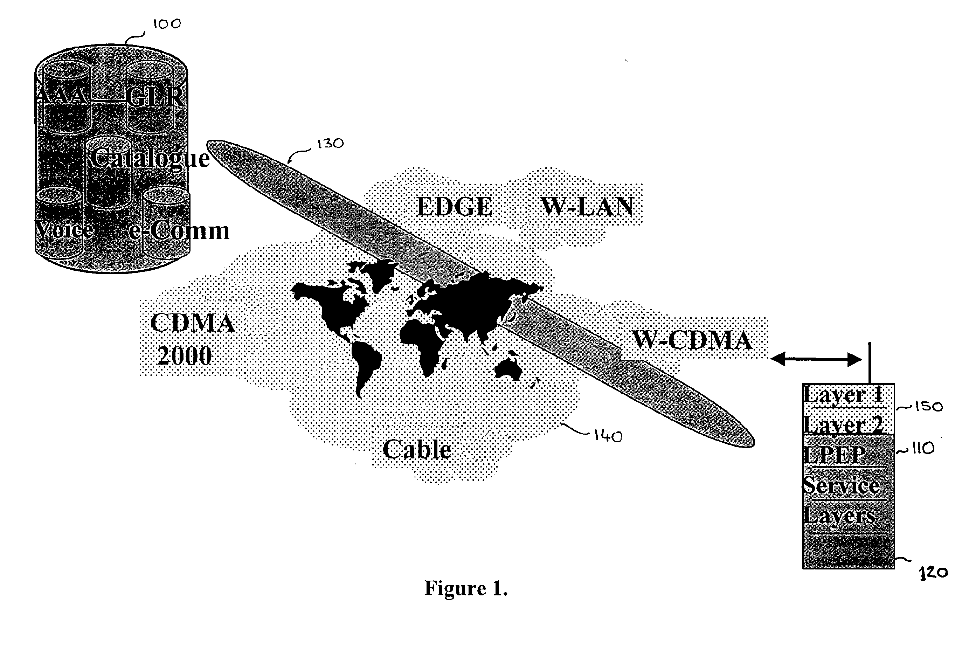

The solution according to the invention will now be further described in more detail with references to figures 1-7.

Figure 1 shows a schematic picture of the architecture for global roaming in which the mobile terminal is used. The architecture can be divided into a service domain, shown in dark grey, and a transport domain, shown in light grey.

The service domain, which covers the higher layers, consists of a server cluster called Secure Mobile Portal (SMP) 100 and a client, governed by a Local Policy Enforcement Point (LPEP) 110 residing in the terminal (client) 120. A secure encrypted tunnel 130 connects the SMP 100 and the LPEP 110 in a Client-Server relationship. This tunnel is enabled by the establishment of shared secrets between the SMP 100 and the LPEP 110, contained in a policy, which is used to generate encryption keys for the IP packets. Since each Internet Protocol (IP) packet is encrypted with a unique key for every subscriber, i.e. a shared secret between the service provider and the subscriber, each packet received by the SMP 100 will be seen as a de facto authentication of a service buyer or subscriber by the service provider.

The SMP 100 acts as a Policy Definition Point (PDP) for the LPEP 110 defining policies with respect to services, authentication of subscribers, authorisation to access and services, accounting, mobility and security for the subscriber. The LPEP 110 residing in the client 120 enforces the policies defined in the SMP 100. A fundamental feature of the architecture is that charging for transport and services are separated and that transport can be paid for in real-time using for example a pre-paid card, credit card, a cash card or the like. Transactions in the service domain are paid for as usual e.g. as per invoice.

The transport domain, consisting of an IP based core network 140 and IP based access networks such as CDMA 2000-, EDGE-, W-LAN-, W-CDMA- or fixed or cable networks, transport packets from the SMP 100 to the LPEP 110. The Layer 1 and layer 2 part 150 of the terminal 120 also belong to the transport domain and is preferably implemented as interchangeable modules (modems) for different accesses such as W-CDMA, EDGE, CDMA 2000, W-LAN etc. The transport domain adds no value to the packets, except that it classifies the packets according to Quality of Service and transports the packets to the end destination, guaranteeing access to physical resources where this is appropriate.

The different access networks in the transport domain must have the appropriate interfaces and support agreed on Quality of Service definitions, a so-called packet pipe. The packet pipe provides layer 1 and layer 2 functions to convey packet data traffic across radio air interfaces. As part of the transport domain the access networks must also be able to process charging information since an important feature of the invention is that transport charging is independent of service charging. The transport domain must thus involve means for charging a subscriber for transport used, e.g. via a pre-paid card, credit card, cash card or other means. It is not necessary that a subscriber is authenticated or authorised by a service provider before transport charging takes place. It is only necessary to validate the pre-paid card, credit card, cash card or the like, i.e. it is possible to implement anonymous payment methods for transport. Access providers can accept different types of payment methods, for payment of transport; e.g. may some access providers accept all major credit cards and their own special cash card for paying for access to their networks. This can be compared to when stores have a sticker on the entrance informing what credit cards they accept.

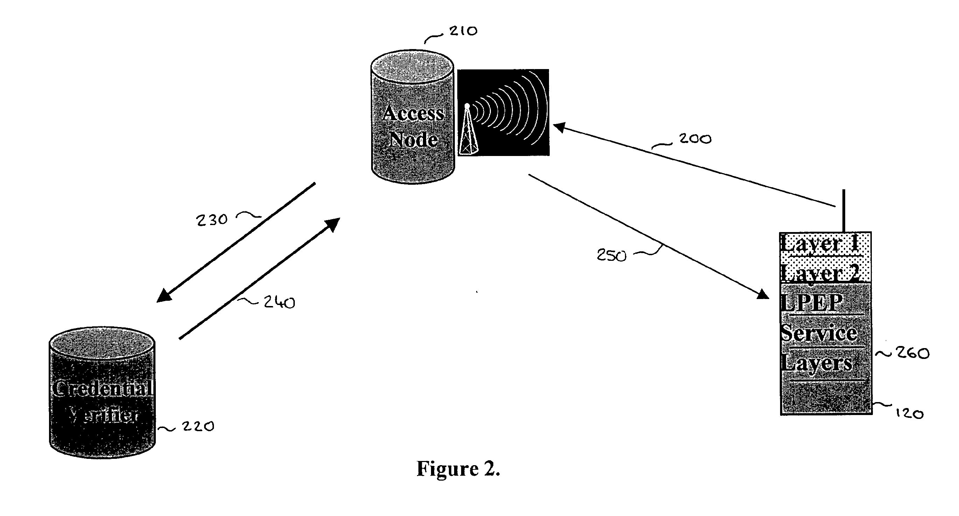

In figure 2 is an exemplifying embodiment of an anonymous payment method shown. The terminal 120 transmits a random access channel (in GSM typically the RACCH) including payment information 200 to an access node 210. The payment information identifies the Credential Verifier (CV) 220 e.g. the issuer of a credit card or an access subscription, the identity of the subscriber in an encrypted form and the credit verification in an encrypted form, e.g. a credit card number. This information is received in the access node 210 which reads out the address to the CV 220 adds a transaction number to the user identity and credit verification and transmits that information 230 to the identified CV 220 e.g. a Mastercard™ server. The CV 220 decrypts the packets sent from the access node 210 with unique keys for that particular subscriber and checks whether the user identity and the credit verification number are correct. In this way the subscriber can be uniquely identified and thus authenticated. If the relationship between the user identity and the credit verification is correct the CV 220 transmits a message with the same transaction number and a positive acknowledgement 240 back to the access node 210. The access node then returns a message 250 to a modem/router interface contained in the terminal containing an IP-address and a positive acknowledgement, granting access. The IP-address is stored in the modem/router interface and in the LPEP 110 and is also associated with a service requested by the subscriber in the service layers 260.

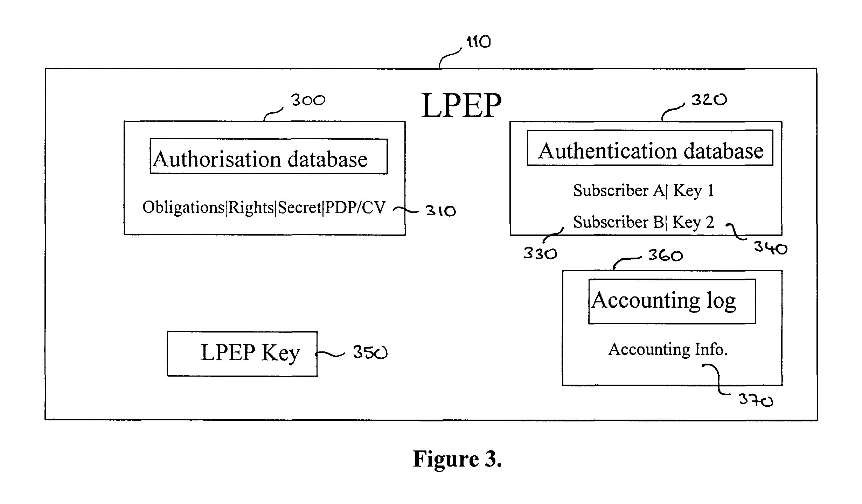

The structure and operation of an exemplary embodiment of the LPEP 110 resident in the terminal 120 will now be described in more detail with reference to figure 3 of the drawings. As discussed above the LPEP 110 enforces policies with respect to authentication of subscribers, authorisation to access and services, accounting, mobility and security for the subscribers that the LPEP 110 serves. These policies are defined in the Secure Mobile Portal (SMP) 100 that acts as a Policy Definition Point (PDP) for the LPEP 110. Each LPEP 110 has a set of policies associated with it and the relationship between the PDP and the LPEP 110 i.e. between the SMP 100 and the subscriber is uniquely defined by these policies in the LPEP authorisation database 300.

Each relation that the subscriber has with SMP's 100 or CV's 220 is defined with at least four parameters 310. These are obligations, rights, a shared secret, i.e. a unique identity and an encryption key, and an IP-address to the SMP 100 or the CV 220. These relations are negotiated either in real time using public key infrastructure or by signing up for a service and receiving the obligations, rights, shared secret and IP-address 310 to the SMP 100 or CV 220 by mail.

The LPEP 110 is also responsible for authenticating the subscriber via e.g. a PIN-code or a fingerprint reading. If the subscriber is authenticated he gains access to the LPEP 110. It is possible that the LPEP 110 serves more than one subscriber, then the authentication database 320 stores several subscribers 330 and their corresponding identification keys 340. The LPEP key 350 on the other hand is used for identifying the LPEP 110 to the SMP 100 or CV 220 and for encrypting the traffic between the LPEP 110 and the SMP 100 or CV 220.

During a communication session the LPEP 110 maintains an accounting log 360 containing accounting information 370 pertaining to the session, such as start time, stop time and service utilised. This accounting log 360 can be used by the SMP 100 for billing and auditing purposes. At completion of the session the LPEP 110 can forward the accounting log 360 to the SMP 100 and the SMP 100 replies in agreement or disagreement, i.e. compare the accounting log in the SMP 100 with the one generated in the LPEP 110. Alternatively the accounting log 360 is transmitted from the LPEP 110 to the SMP 100 at regular intervals, such as at the end of the day.

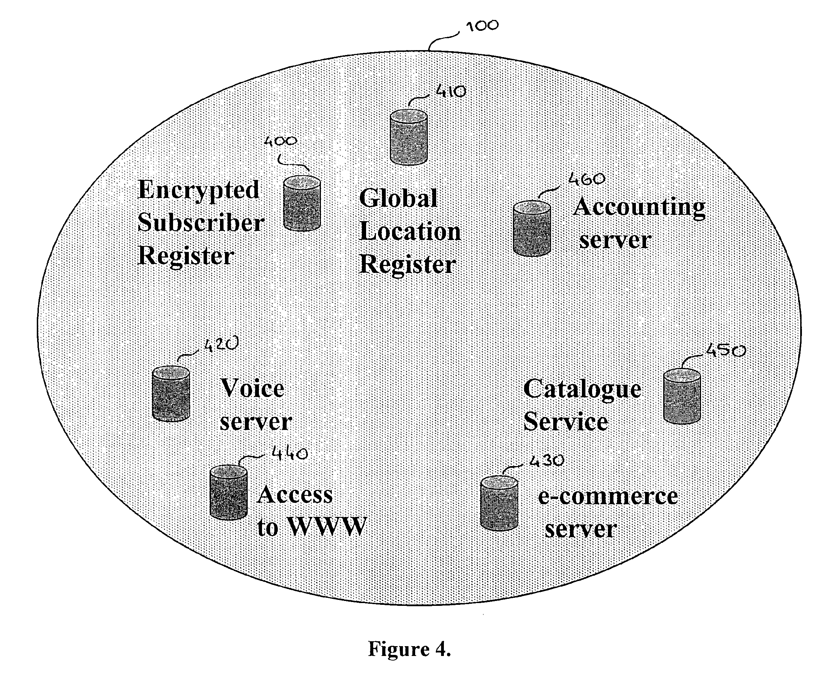

With reference now to figure 4 of the drawings the structure and operation of an exemplary embodiment of the SMP 100 will be described in more detail. As discussed above, the SMP 100 defines policies with respect to authentication of subscribers, authorisation to access and services, accounting, mobility and security for the subscribers that the SMP 100 serves. Thus, the SMP 100 contains an Encrypted Subscriber Register 400 carrying subscriber IP addresses or network address identifiers (NAI), e.g. N.N@telia.mob as well as encryption keys for each individual subscriber and service that the SMP 100 serves, to provide encryption, authentication and authorisation to the services provided. The SMP 100 also contains a Global Location Register (GLR) 410 indicating which access networks the subscriber presently is residing (visiting) in. To be able to provide voice services the SMP 100 also contain a voice server 420 for providing e.g. voice over IP. The SMP 100 can be seen as a server cluster providing both secure and non-secure services to the subscriber; secure services like e-commerce 430 Security alarms, Health care services etc. and non-secure services like web browsing 440 and catalogue/information services 450. The SMP 100 also contains a secure accounting server 460 for accounting and auditing of records. The SMP 100 can also update the policies in the LPEP 110. For example if the subscriber does not pay the invoices for a particular service, that service can be barred.

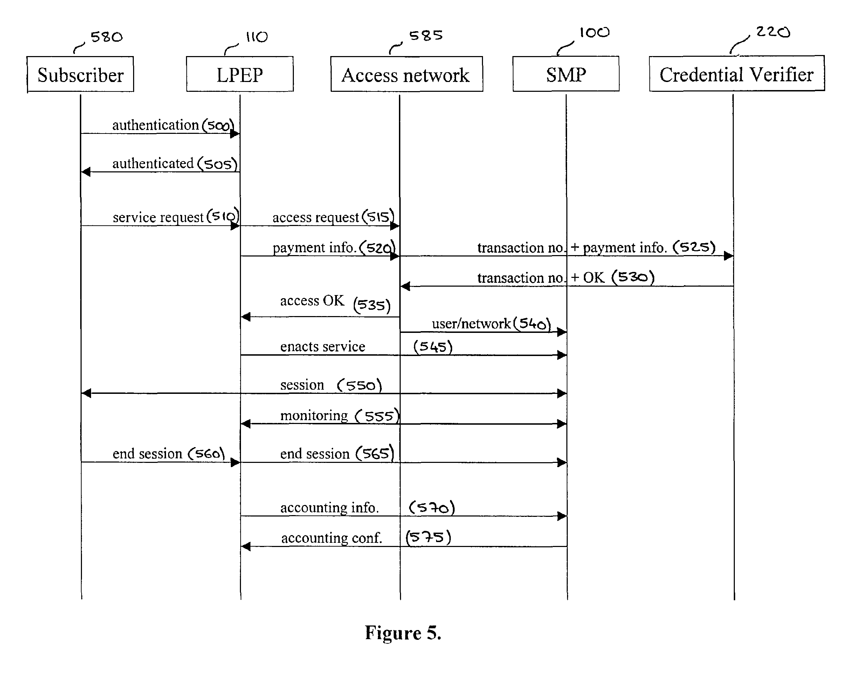

With reference now to the signalling diagram shown in figure 5 of the drawings the initiation of a session will be described in more detail. To initiate a session a subscriber 580 transmits an authentication request 500 including subscriber 580 identity and a corresponding key e.g. a personal identification number (PIN) or a fingerprint, to gain access to the terminal and the rights of the LPEP 110. When the subscriber 580 receives an authentication reply 505 indicating that the subscriber 580 is authenticated to use the terminal, a service request 510 is transmitted to the LPEP 110. The LPEP 110 decides on a suitable access depending on the service requested by the subscriber 580. Then an access request 515 is transmitted to the chosen access network 585 identifying the subscriber 580 and corresponding payment information 520, everything but the address to the Credential Verifier is encrypted by the LPEP key. The access network 585 reads the payment information and identifies the address to the CV 220, generates a transaction number and adds the payment information, i.e. the user identity in an encrypted form and the credit verification in an encrypted form, e.g. a credit card number, and transmits the message 525 to the CV 220. The CV 220 decrypts the message and if the relationship between the user identity and the credit verification is correct the CV transmits a message with the same transaction number and verifies the subscriber's credentials 530. The access network 585 transmits access OK 535 together with an IP-address to the LPEP 110 and at the same time the access network 585 transmits a message 540 to the SMP 100 indicating in what network the subscriber 580 is residing in. The LPEP 110 then enacts 545 the requested service 510 in the SMP 100 and the subscriber 580 and the SMP conducts a session 550. The LPEP 110 and the SMP 100 monitors 555 all transactions between the LPEP 110 and the SMP 100 for accounting purposes. To end the session the subscriber 580 transmits an end session message 560 to the LPEP 110 that transmits an end session message 565 to the SMP 100. When the session has ended the LPEP 110 sends accounting information 570 to the SMP 100 that compares it with the accounting information generated in the SMP 100 and sends a positive or negative accounting confirmation 575 back to the LPEP 110.

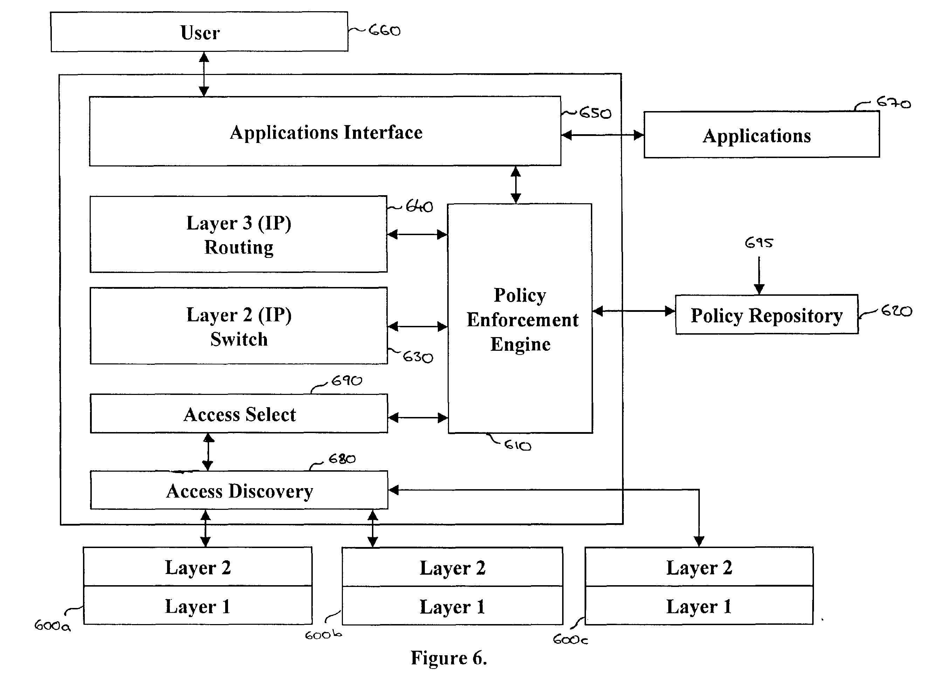

With reference now to figure 6 embodiments and functions of the terminal will be described in more detail. The terminal is basically separated into three parts, an access part, a control part and a service part. The access part contains a number of access options (modems) 600a-c. These access options can physically be located in the terminal itself or in someone else's terminal or be a Bluetooth™ interface connecting to remote modems e.g. in the subscriber's briefcase. The service part contains a user interface and applicable application programming interfaces (API's) for the services. The control part contains a policy enforcement point divided into a policy enforcement engine 610 and a policy repository 620.

The terminal also contains a layer 2 IP switch 630 and a layer 3 IP router 640 between the modems 600a-c and the applications interface 650. This enables the user 660 the possibility to have several information flows between applications 670 and modems 600a-c active at the same time. For example can a voice over IP data flow be maintained through a W-CDMA network, at the same time as a multimedia flow is maintained through a W-LAN network, while the terminal at the same time is receiving a best effort flow from another terminal, through a Bluetooth™ modem. This possibility to route a plurality of data flows from a plurality of modems 600a-c is possible because of the included layer 2 IP switch 630, and layer 3 IP routing 640. This embodiment also makes it possible for the terminal to hand over a communication session from one communications network to another, by re-routing the data flow from one modem port to another.

The access discovery function 680 of the terminal is continuously active, scanning the surroundings for access possibilities and generates a record of all available access possibilities. The access selection function 690 is responsible for requesting access and presenting credentials to the desired access network depending on the service requested from the service layers and also for preparing to interconnect with the chosen access network.

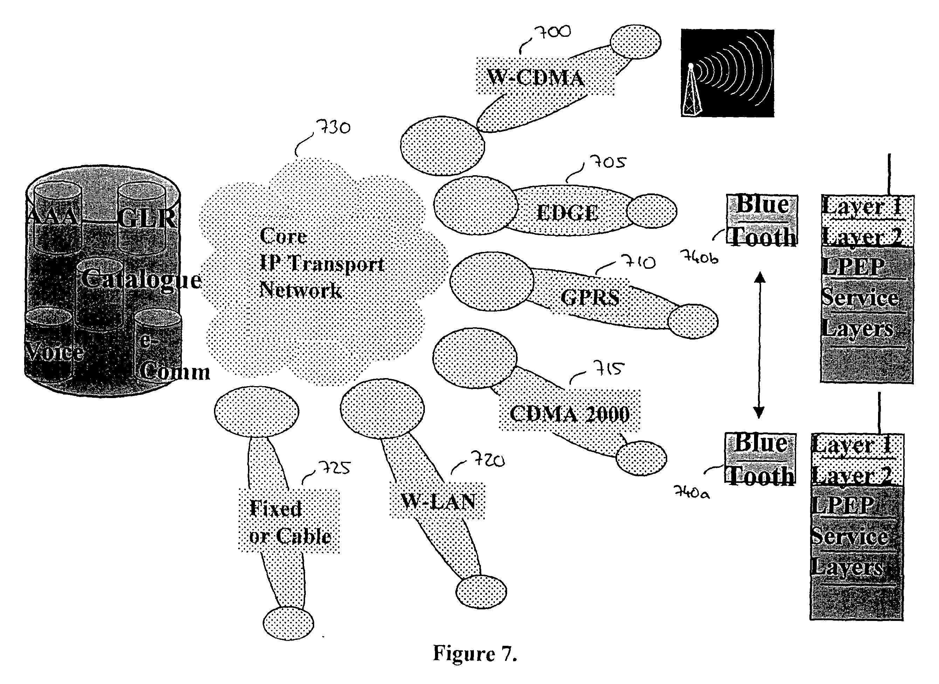

The policy enforcement engine 610 and the policy repository 620 in the control part connect the modems 600a-c in the access part with the user 660 and the API's in the service part. More specifically the policy enforcement engine 610 in the control part has the responsibility for a variety of tasks such as authenticating the user 660 to the terminal, authorising the user 660 to services and collecting accounting data. These and other tasks will be further described in relation to figure 7.

The policy repository 620 of the terminal can be seen as a database containing the subscribers relationship to access providers, service providers as well as individual clients, i.e. the obligations, rights, shared secrets and addresses to credential verifiers or SMP's. These relationships can be varying and sometimes extremely complex.

Some service providers may e.g. have a hierarchical relation between different aspects of its service. For example might a special access network or a special gateway need to be used or passed before a particular service can be executed and maybe as a last item a trusted relationship will be enacted for a particular session. Other service provider might be non-hierarchical, which means that the different services are open and enacted at the same level, e.g. any access network may be used.

A subscriber may have a relationship to many different structures, hierarchical and flat. All these relationships must be reflected in the policy repository 620. Each relationship the user 660 or subscriber would like to enter into is defined using at least four parameters. These are rights, obligations, shared secret, and address to credential verifier or SMP, creating a policy block. The policy repository 620 contains several policy blocks defining the relationships that exists between the user 660 and different service providers as well as individuals. A coupling matrix is defined between these policy blocks defining their hierarchical relationship. If the coupling coefficient is zero there is no relationship and if the coupling coefficient is one the preceding policy block is higher in the hierarchy.

The policy repository 620 can be accessed from outside 695 of the terminal providing the user has opened the policy repository 620 by e.g. a personal identification code, a fingerprint or other means. Then a service provider can update their policy block and relevant coupling coefficients. Once the service provider has entered its policies into the policy repository 620 these can be updated at will by the service provider providing such an agreement exists. If no such agreement exists the subscriber must open the policy repository 620 every time before changes can be made.

The policy enforcement engine 610 thus enforces policies defined in policy repositories 620. This implies e.g. that rental cars, hotel rooms etc. can be provided with policy enforcement engines 610 executing the policies in a user's or visitor's policy repository 620. The communication between the policy enforcement engine and the policy repository is preferably done by a suitable wireless application, e.g.

Bluetooth™. Both the policy enforcement engine 610 and the policy repository 620 is preferably implemented as computer programs on a suitable media, e.g. smart cards together with a suitable wireless access product such as Bluetooth™. Other implementations are of course possible, e.g. integrated circuits, a circuit board in the terminal or as a separate circuit board that can be inserted into any appropriate terminal.

With reference now to figure 6 and 7 the tasks of the control part of the terminal will be described in more detail together with a mixed access scenario. Suppose that the access possibilities consists of several different networks, such as W-CDMA 700, EDGE 705, GPRS 710, CDMA-2000 715, W-LAN 720 or Fixed or Cable 725 and that the transport network is an IP based core network 730. To gain access to the functions of the terminal and the policy enforcement engine 610 and policy repository 620 the user 660 must be authenticated. Thus an authentication request is transmitted to the policy enforcement engine 610 that checks the authentication with the relevant policy blocks in the policy repository 620. When the user 660 is authenticated all the rights and obligations associated with the user in the policy repository 620 are open.

The access discovery function 680, which is continuously active, has scanned all available access networks and found the above mentioned access possibilities 700-725 and made a record of what is available. The user 660 now e.g. wants to initiate a web-service and thus via the applications interface 650 agree on parameters, i.e. a Quality of Service parameter for the session, e.g. the transmission rate. The applications interface 650 thereafter asks the policy enforcement engine 610 to enact the requested web-service, with the specified Quality of Service parameters for that session. The policy enforcement engine 610 then collects data from the policy repository 620 and the access selection function 690 to set up a channel that complies with the agreed parameters and the requested service and thereafter activates the connection.

If the user 660 doesn't have a subscription to the requested network, the policy enforcement engine 610 presents credentials to the appropriate access supplier as described above in relation to figure 2. The credentials can e.g. be a credit card accepted by the access supplier. The policy enforcement engine 610 then launches the requested web-service according to the policies in the policy repository 620. The policy enforcement engine 610 tracks data exchanged during the executed web-service according to policies for accounting and verification purposes. Then the policy enforcement engine 610 disconnects the application 670 and assembles the accounting data.

Another possibility occurs if the terminal doesn't have the appropriate modem 600a-c for the best access network. Imagine for example that the GPRS network 710 is most suitable for the requested web-service but the user terminal only has a W-CDMA interface. The solution is the Bluetooth™ modem 740 a-b attached to the terminal, which makes it possible to use the modems 600a-c of a neighbouring terminal. The Bluetooth™ modem 740a-b in the neighbouring terminal then acts as an access point or bridge to access a GPRS modem belonging to the other terminal.

The invention being thus described, it will be obvious that the same may be varied in many ways. Such variations are not to be regarded as a departure from the scope of the invention, and all such modifications as would be obvious to a person skilled in art are intended to be included within the scope of the following claims.

## Claims

1. A mobile terminal for accessing services via at least two mutually heterogeneous networks, the mobile terminal including, at least two modems, at least one policy enforcement point enforcing policies defined in a policy definition point **characterised** in that
the at least one policy enforcement point is located in the mobile terminal including means for managing the terminal's access to services via at least one of the modems in at least one of the at least two mutually heterogeneous networks.

2. The mobile terminal according to claim 1, further **characterised** in that the mobile terminal includes a layer 2 switch and a layer 3 router connecting data flows from at least one of the at least two modems with at least one user application.

3. The mobile terminal according to claim 2, **characterised** in that the mobile terminal hands over a session from one of the mutually heterogeneous networks to another, by re-routing the data flow within the mobile terminal from one of the at least two modems to another.

4. The mobile terminal according to claim 2, **characterised** in that the mobile terminal routes several data flows from ongoing independent service sessions with more than one service supplier from at least on of the at least two modems to the corresponding user application.

5. The mobile terminal according to claim 1, **characterised** in that the mobile terminal includes means for acting as a bridge to one of the at least two mutually heterogeneous networks for a second mobile terminal to access one of said at least two mutually heterogeneous networks.

6. The mobile terminal according to claim 5, **characterised** in that said bridge is a Bluetooth interface.

7. The mobile terminal according to claim 1, **characterised** in that the policy enforcement point is divided into a policy enforcement engine and a policy repository.

8. The mobile terminal according to claim 7, **characterised** in that the policy repository is updated from the policy definition point.

9. The mobile terminal according to claim 7, **characterised** in that the policy repository includes a coupling matrix defining hierarchical and non-hierarchical relationships between subscribers and service providers as well as other subscribers.

10. The mobile terminal according to claim 7, characterised in that the policy repository and policy enforcement engine is implemented by software code means.

11. The mobile terminal according to any of the preceding claims, **characterised** in that the at least two modems are implemented as interchangeable modules

12. A method for accessing services via at least two heterogeneous networks, using a mobile terminal including at least two modems, at least one policy enforcement point enforcing policies defined in a policy definition point, **characterised** by
authenticating and authorising a subscriber in the policy enforcement point;
negotiating and requesting access to at least one of the heterogeneous networks;
presenting credentials from the policy enforcement point to an access node in at least one of the heterogeneous networks; and
connecting service and access in the policy enforcement point.
